# EUROPÄISCHE PATENTSCHRIFT

(11) **EP 1 850 127 B1**
(45) Veröffentlichungstag und Bekanntmachung des Hinweises auf die Patenterteilung: **12.12.2012**
(21) Anmeldenummer: 07007962.9
(22) Anmeldetag: 19.04.2007
(51) Int. Cl.: G01N 29/26, G01N 29/34, G10K 11/34, G21C 17/01

(54) **Verfahren und Einrichtung zur Ultraschallprüfung einer an der Innenoberfläche eines Reaktordruckbehälters befindlichen Schweissnaht**
Method and device for ultrasonic testing a welded seam on the inner surface of a reactor pressure container
Procédé et dispositif destiné à la vérification ultrasonore d'un cordon de soudure se trouvant à la surface interne d'un récipient de pression d'un réacteur

(30) Priorität: 28.04.2006 DE 102006020352
(43) Veröffentlichungstag der Anmeldung: 31.10.2007
(73) Patentinhaber: intelligeNDT Systems & Services GmbH, 91052 Erlangen (DE)
(72) Erfinder: Meier, Rainer, 91058 Erlangen (DE); Rehfeldt, Thomas, 91096 Möhrendorf (DE); Kaluza, Peter, 96049 Bamberg (DE)
(74) Vertreter: Mörtel & Höfner

(56) Entgegenhaltungen:
- EP-A- 0 539 049
- EP-A- 0 619 489
- EP-A- 1 415 731
- US-A- 5 460 045
- US-A1- 2004 091 076

## Beschreibung

Die Erfindung bezieht sich auf ein Verfahren und eine Einrichtung zum Prüfen einer an der Innenoberfläche eines Reaktordruckbehälters eines Kernreaktors befindlichen Schweißnaht, mit der ein in das Innere dieses Reaktordruckbehälters führender Instrumentierungsstutzen an seinem Außenumfang an den Reaktordruckbehälter angeschweißt ist.

Die Reaktordruckbehälter von Druckwasserreaktoren sind häufig an ihrer unteren Kalotte (Bodenkalotte) mit Durchführungen versehen, durch die Kerninstrumentierungssonden von außerhalb in den Reaktordruckbehälter eingeführt werden. Diese Durchführungen oder Instrumentierungsstutzen (LCIP = Lower Core Instrumentation Penetration) sind aus einer Schmiedestange mit Durchgangsloch hergestellt und mit einer innerhalb des Reaktordruckbehälters liegenden und an ihrem Außenumfang ringförmig umlaufenden Schweißnaht eingeschweißt. Besonders in älteren Anlagen wurden für die Durchführungen, den Schweißzusatz und die auf der Innenoberfläche des Reaktordruckbehälters aufgebrachte Pufferschweißung Werkstoffe verwendet, die sich als besonders anfällig gegen Spannungsrisskorrosion erwiesen haben. Spannungsrisskorrosion ist dabei ein Korrosionsvorgang, der in der Umgebung von Wasser an Bauteilen auftritt, die innere Spannungen aufweisen.

Die Schweißnaht ist in aller Regel als sogenannte "J-Groove Weld" ausgeführt und läuft zum Instrumentierungsstutzen hin mit einer Kehle aus. Die Geometrie der Schweißnaht ist dabei abhängig von der Position des Instrumentierungsstutzens an der Bodenkalotte. So weist die Schweißnaht, mit der ein Instrumentierungsstutzen im Zentrum der Bodenkalotte angeschweißt ist, eine um die Mittenachse des Instrumentierungsstutzens rotationssymmetrische Kontur auf, während die Kontur der Schweißnaht eines am Rand der Bodenkalotte angeschweißten Instrumentierungsstutzens unsymmetrisch ist.

Aufgrund ihrer Anfälligkeit gegen Spannungsrisskorrosion müssen diese Schweißnähte in regelmäßigen Zeitabständen überprüft werden. Wegen der insbesondere durch die unsymmetrische Kontur der Schweißnaht verursachten Komplexität des Prüfproblems erfolgt diese Überprüfung in der Regel nur visuell mit einer in den Reaktordruckbehälter eingebrachten Videokamera. Hierzu ist ein vorheriges Entladen der Brennelemente erforderlich. Bei einer solchen visuellen Inspektion können allerdings nur Risse erkannt werden, die bereits ein erhebliches Ausmaß erreicht haben. Alternativ zu einer solchen visuellen Inspektion ist auch der Versuch unternommen worden, die Schweißnähte mit einer Wirbelstromprüfsonde zu untersuchen (http://www.nrc.gov.edgesuite.net/reactors/operating/ops-experience/pressure-boundary-integrity/bottom-head-issues/bottom-head-files/july-17-nrc.pdf). Erschwert wird dies jedoch durch die unregelmäßige Oberflächengeometrie der Schweißnaht. Außerdem ist bei einer Wirbelstromprüfung eine Bestimmung der Risstiefe durch den Skineffekt begrenzt. Auch in diesem Fall muss darüber hinaus der Kern vollständig entladen werden.

Aus der US 5,460,045 ist es bekannt, die Schweißnaht eines bei Reparaturmaßnahmen neu eingesetzten Instrumentierungsstutzens eines Siedewasserreaktors mit einer Ultraschallprüfsonde zu prüfen, die in das Innere des Instrumentierungsstutzens eingefahren werden kann. Je nach Prüfaufgabe enthält die Ultraschallprüfsonde fünf oder neun Ultraschallwandler, die derart orientiert sind, dass sowohl in Umfangsrichtung verlaufende als auch in Radialrichtung orientierte Rissfehler erkannt werden können. Zum Erkennen von in Umfangsrichtung orientierten Rissfehlern sind wenigstens zwei axial voneinander beabstandete Ultraschallwandler vorgesehen, die jeweils sich schräg zur Längsachse der Sonde ausbreitende Ultraschallsignale erzeugen. Ein Ultraschallwandler erzeugt ein sich radial ausbreitendes Ultraschallsignal und zwei weitere Ultraschallwandler erzeugen ein sich in einer senkrecht zur Axialrichtung in oder entgegen der Uhrzeigerrichtung ausbreitendes Ultraschallsignal. Zur Überprüfung der ringförmig umlaufenden Schweißnaht wird eine Ultraschallprüfsonde mit fünf Ultraschallwandlern verwendet.

Eine in einen Rohrstutzen einführbare Ultraschallprüfsonde mit fünf unterschiedlich orientierten Ultraschallwandlern ist auch aus der EP 0 539 049 A1 bekannt. Bei dieser bekannten Ausführungsform sind alle Ultraschallwandler in einer einzigen, senkrecht zur Längsachse der Ultraschallprüfsonde orientierten Ebene angeordnet.

Mit Hilfe eines aus der EP 0 619 489 A1 bekannten Verfahrens wird geprüft, wie tief sich in einem Stutzen ein radialer Riss ausbreitet, der sich in der Nähe einer Schweißnaht befindet, mit dem dieser Stutzen innerhalb des Reaktordruckbehälters mit einem Steuerstabantriebsgehäuse verschweißt ist. Um die Prüfung eines solchen radialen Risses zu ermöglichen, wird die Schweißnaht vor dem Aufsetzen einer Dichthülse an einer Mehrzahl von Stellen bearbeitet, um plane Prüfzonen zu erzeugen, die einen unter 45° zur Längsachse des Stutzens geneigten Reflektor bilden. Die Prüfung erfolgt dann mit Hilfe einer Mehrzahl von Ultraschallwandlern, die in Längsrichtung des Stutzens nebeneinander angeordnet sind. Das von diesen Ultraschallwandlern ausgehende Ultraschallsignal breitet sich senkrecht zur Mittenachse des Stutzens aus, wird an der in die Schweißnaht eingebrachten Reflektorfläche um 90° reflektiert, so dass es sich anschließend innerhalb des Stutzens in dessen Längsrichtung ausbreitet.

Der Erfindung liegt nun die Aufgabe zugrunde, ein Verfahren anzugeben, mit dem es möglich ist, eine an der Innenoberfläche eines Reaktordruckbehälters befindliche Schweißnaht, mit der ein in das Innere dieses Reaktordruckbehälters-führender Instrümentierungsstutzen an seinem Außenumfang an den Reaktordruckbehälter angeschweißt ist, mit hoher Zuverlässigkeit und Nachweisempfindlichkeit zu prüfen. Außerdem liegt der Erfindung die Aufgabe zu Grunde, eine zum Durchführen dieses Verfahrens geeignete Einrichtung anzugeben.

Hinsichtlich des Verfahrens wird die genannte Aufgabe gemäß der Erfindung gelöst mit einem Verfahren mit den Merkmalen des Patentanspruches 1. Bei diesem Verfahren wird in den Instrumentierungsstutzen eine Ultraschall-Prüfsonde eingeführt, mit der in den Instrumentierungsstutzen im Bereich der Schweißnaht ein Ultraschallsignal eingekoppelt und ein reflektiertes Ultraschallsignal empfangen wird.

Die Erfindung beruht dabei auf der Überlegung, dass durch eine Einkopplung eines Ultraschallsignals in die Schweißnaht ausgehend von der Innenseite des Instrumentierungsstutzens aufgrund der an der Innenoberfläche des Instrumentierungsstutzens vorliegenden einfachen geometrischen Verhältnisse die Empfindlichkeit, mit der ein Rissfehler nachgewiesen werden kann, deutlich gegenüber den im Stand der Technik bekannten Verfahren verbessert ist.

Darüber hinaus ist der Aufwand für die Führung der Ultraschall-Prüfsonde vereinfacht, da diese innerhalb des Instrumentierungsstutzens problemlos auf der Innenoberfläche in deren Umfangsrichtung und in deren Axialrichtung durch eine Drehbewegung bzw. eine axiale Translationsbewegung verfahren werden kann und nicht auf einer komplexen Schweißnahtoberfläche geführt werden muss.

Da die Prüfung der Schweißnaht ausgehend von der Innenoberfläche des Instrumentierungsstutzens erfolgt, ist es außerdem grundsätzlich möglich, die Prüfung durchzuführen, ohne dass hierzu die Brennelemente aus dem Reaktordruckbehälter entladen werden müssen.

Da sich das gesendete Ultraschallsignal innerhalb des Instrumentierungsstutzens unter einem schiefen Winkel, d. h. schräg zur Mittenachse ausbreitet, können mit hoher Nachweisempfindlichkeit auch Rissfehler detektiert werden, die schräg zu dieser Mittenachse verlaufen und sich im Bereich der Schweißnahtoberfläche befinden.

Da außerdem zum Erzeugen des Ultraschallsignals ein aus einer Mehrzahl von in einer Längsrichtung nebeneinander angeordneten Wandlerelementen aufgebautes Ultraschallwandlerarray verwendet wird, das mit seiner Längsrichtung parallel zur Mittenachse angeordnet ist und dessen Wandlerelemente zum Einstellen des Winkels, mit dem sich das Ultraschallsignal innerhalb des Instrumentierungsstutzens relativ zur Mittenachse ausbreitet, zeitverzögert zueinander angesteuert werden, wird eine besonders gute Detektierbarkeit von Rissfehlern erreicht, die mit unterschiedlicher Neigung schräg zur Mittenachse verlaufen.

Darüber hinaus kann das Ultraschallsignal durch entsprechende zeitverzögerte Ansteuerung der Wandlerelemente zusätzlich auf unterschiedliche Fokustiefen fokussiert werden. Dadurch wird eine besonders hohe Prüfempfindlichkeit für in dieser Fokustiefe befindliche Rissfehler erzielt.

In einer vorteilhaften Ausgestaltung des Verfahrens breitet sich das gesendete Ultraschallsignal innerhalb des Instrumentierungsstutzens in einer Ebene aus, die parallel und beabstandet zur Mittenachse des Instrumentierungsstutzens ist. Mit anderen Worten: Das Ultraschallsignal wird innerhalb des Instrumentierungsstutzens in eine solche Richtung gesendet, dass die Projektion seiner Ausbreitungsrichtung auf eine senkrecht zur Mittenachse des Instrumentierungsstutzens und durch den Auftreffpunkt des Ultraschallsignals auf die Innenoberfläche verlaufenden Ebene einen von Null verschiedenen Winkel zur im Einschall- oder Auftreffpunkt senkrecht auf der Innenoberfläche stehenden Normalen einnimmt. Durch diese Maßnahmen können besonders gut Risse detektiert werden, die sowohl axial als auch radial in der Schweißnaht verlaufen.

Das Verfahren wird insbesondere mit zumindest einem in Impuls-Echo-Technik betriebenen Ultraschallwandlerarrays durchgeführt.

Eine zusätzlich verbesserte Beurteilung der empfangenen reflektierten Ultraschallsignale ist dann möglich, wenn eine in Sende-Empfangs-Technik betreibbare Ultraschallwandleranordnung mit zumindest zwei Ultraschallwandlerarrays verwendet wird, die voneinander räumlich beabstandet und spiegelsymmetrisch zu einer die Mittenachse enthaltenden Ebene angeordnet sind. Mit einer solchen Anordnung können insbesondere in Umfangsrichtung verlaufende Rissfehler besonders sicher detektiert werden.

In einer weiteren bevorzugten Ausgestaltung der Erfindung werden für das gesendete Ultraschallsignal Transversalwellen verwendet. Dadurch ist insbesondere die Auffindbarkeit radial verlaufender und sich in Axialrichtung erstreckender Risse verbessert.

Hinsichtlich der Einrichtung wird die Aufgabe gelöst mit einer Einrichtung mit den Merkmalen des Patentanspruches 6, deren Vorteile ebenso wie die Vorteile der ihm untergeordneten Unteransprüche sinngemäß den zu den zugehörigen Verfahrensansprüchen angegebenen Vorteilen entsprechen.

Zur weiteren Erläuterung der Erfindung wird auf die Ausführungsbeispiele der Zeichnung verwiesen. Es zeigen:
Fig. 1 und 3 jeweils einen teilweisen Längsschnitt durch die Bodenkalotte eines Reaktordruckbehälters mit einem darin eingeschweißten Instrumentierungsstutzen mit jeweils unterschiedlich orientierten Rissfehlern,
Fig. 2 und 4 den zur Fig. 1 bzw. Fig. 3 zugehörigen Querschnitt durch den Instrumentierungsstutzen, in dem die Schweißnaht jeweils in einer Draufsicht wiedergegeben ist,
Fig. 5 eine Seitenansicht einer Prüfsonde gemäß der Erfindung mit einem teilweisen Längsschnitt,
Fig. 6 einen Querschnitt durch die Prüfsonde,
Fig. 7 und 8 jeweils eine alternative Ausführungsform der Ultraschallprüfsonde gemäß der Erfindung ebenfalls in einem schematischen Querschnitt.

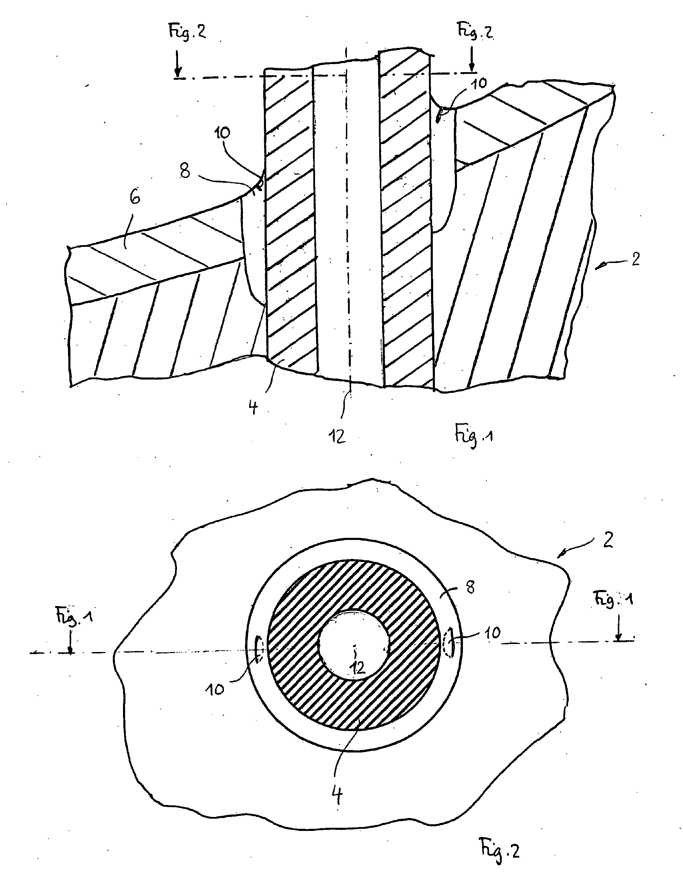

Gemäß Fig. 1 und 2 ist in der Bodenkalotte eines Reaktordruckbehälters 2 ein hohlzylindrischer Instrumentierungsstutzen 4 angeordnet, der in das Innere des Reaktordruckbehälters 2 führt. Auf seiner Innenoberfläche ist der Reaktordruckbehälter 2 mit einer Pufferschweißung 6 oder Schweißplattierung aus Inconel oder Edelstahl versehen. An dieser Innenoberfläche ist der Instrumentierungsstutzen 4 mit einer ihn ringförmig umgebenden Schweißnaht 8 unter Verwendung eines Schweißzusatzwerkstoffes aus Inconel eingeschweißt.

Im dargestellten Beispiel weist nun diese Schweißnaht 8 Rissfehler 10 auf, die von der freien, die Gestalt einer Hohlkehle aufweisenden Oberfläche der Schweißnaht 8 ausgehen und sich in das Innere der Schweißnaht 8 schräg zur Mittenachse 12 des Instrumentierungsstutzens 4 erstrecken. Diese Rissfehler verlaufen an der Oberfläche annähernd in Umfangsrichtung und haben die Form einer Halbellipse, wie dies aus der gestrichelten Darstellung der Fig. 2 erkennbar ist.

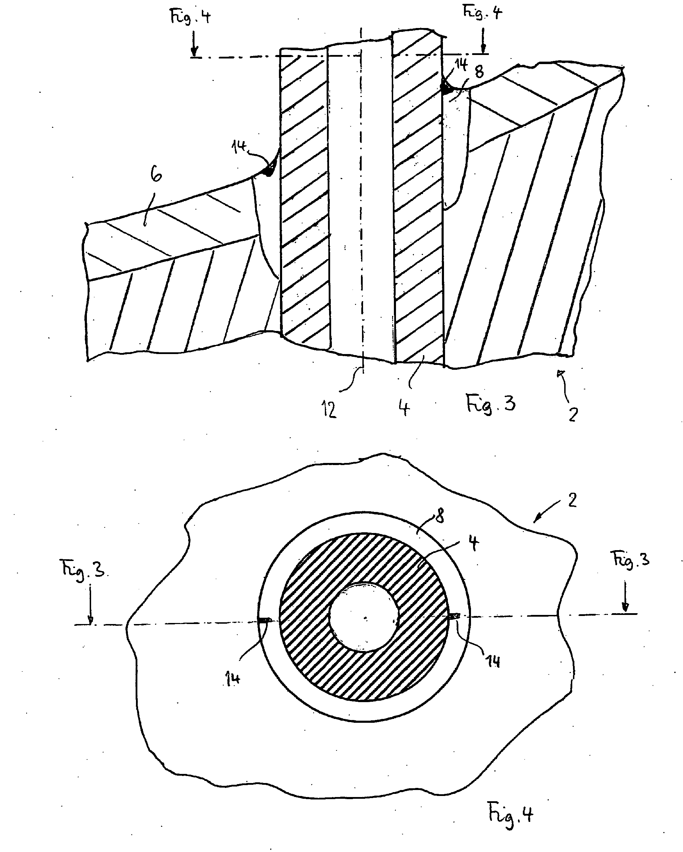

Im Beispiel der Fig. 3 und 4 sind flächige Rissfehler 14 dargestellt, die ebenfalls von der freien Oberfläche der Schweißnaht ausgehen und anders als die in Fig. 1 und 2 dargestellten Rissfehler 10 im wesentlichen radial zur Mittenachse 12 orientiert sind.

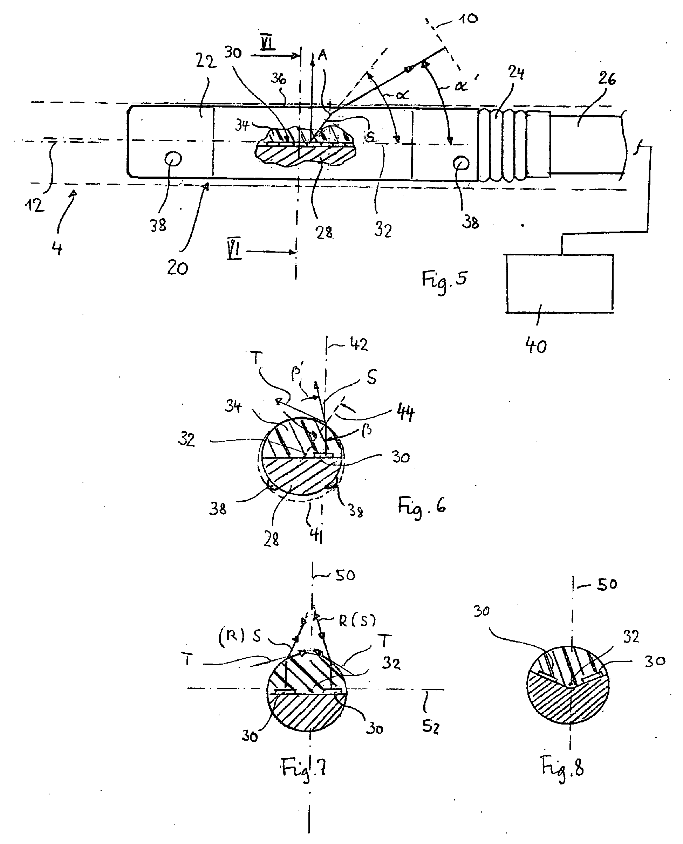

Gemäß Fig. 5 umfasst eine Einrichtung gemäß der Erfindung eine Ultraschall-Prüfsonde 20, die in das Innere eines in der Figur nur mit seiner Innenwand gestrichelt dargestellten Instrumentierungsstutzens 4 eingeführt werden kann und deren Außendurchmesser nur geringfügig kleiner ist als der Innendurchmesser des Instrumentierungsstutzens 4. Die Ultraschall-Prüfsonde 20 umfasst einen zylindrischen Sondenkopf 22 der über einen Federbalg 24 an eine Vorschubstange oder einen flexiblen Vorschubschlauch 26 montiert ist, mit der er in den Instrumentierungsstutzen 4 eingeführt und darin bis zur Höhe der Schweißnaht vorgeschoben werden kann. Zur flexiblen Kopplung zwischen Vorschubstange 26 und Sondenkopf 22 kann anstelle eines Federbalgs 24 auch ein Kardangelenk vorgesehen sein.

Im Sondenkopf 22 ist auf einem Dämpfungskörper (Backing) 28 ein lineares Ultraschallwandlerarray 30 derart angeordnet, dass seine Sendefläche annähernd in einer die Längsachse 32 des Sondenkopfes 22 enthaltenden Ebene liegt. Das lineare Ultraschallwandlerarray 30 ist aus einer Mehrzahl von in einer Längsrichtung nebeneinander angeordneten Wandlerelementen aufgebaut und ist mit seiner Längsrichtung parallel zur Längsachse 32 des Sondenkopfes 22 angeordnet.

Das Ultraschallwandlerarray 30 ist in einem halbzylindrischen Vorlaufkörper 34 aus PMMA eingebettet, dessen vom Ultraschallwandler 30 abgewandte Oberfläche zugleich als zylindrische Koppelfläche 36 dient, die an der Innenoberfläche des Instrumentierungsstutzens 4 zur Anlage gebracht wird. Um eine möglichst spaltfreie Ankopplung zu erzielen, sind auf der der Koppelfläche 36 abgewandten Seite des Sondenkopfes 22 eine Mehrzahl, im Ausführungsbeispiel vier noppenartige, federnd gelagerte Stützelemente 38 angeordnet, die sich an der Innenoberfläche des Instrumentierungsstutzens 4 abstützen und die Koppelfläche 36 an die den Stützelementen 38 abgewandte Innenoberfläche des Instrumentierungsstutzens 4 andrücken.

Die Ultraschall-Prüfsonde 20 ist an eine in der Figur nur schematisch angedeutete Steuer- und Auswerteeinrichtung 40 angeschlossen, mit der die einzelnen Wandlerelemente zeitverzögert derart angesteuert werden können, dass sich das vom Ultraschallwandler 30 gesendete Ultraschallsignal S, bei dem es sich vorzugsweise um eine Transversalwelle handelt, innerhalb der Ultraschall-Prüfsonde 20 schräg zu deren Längsachse 32 und damit auch schräg zu der praktisch mit ihr zusammenfallenden Mittenachse 12 des Instrumentierungsstutzens 4 ausbreitet. Das gesendete Ultraschallsignal S trifft dann unter einem schiefen Winkel α auf die Innenoberfläche des Instrumentierungsstutzens 4 auf und wird beim Übertritt in den Instrumentierungsstutzen 4 zusätzlich zur Längsachse 32 hin gebrochen, so dass es sich unter einem schiefen Winkel α', der kleiner ist als der schiefe Winkel α im Instrumentierungsstutzen 4 zur Schweißnaht hin ausbreitet. Auf diese Weise können schräg zur Längsachse 32 bzw. zur Mittenachse 12 orientierte Rissfehler 10 mit einem im Impuls-Echo-Verfahren betriebenen Ultraschallwandler 30 sicher detektiert werden. Im dargestellten Beispiel ist der Winkel α' derart eingestellt, dass das gesendete Ultraschallsignal S senkrecht auf eine durch den Rissfehler 10 gebildet Grenzfläche auftrifft und in sich selbst reflektiert wird, so dass er im Empfangsbetrieb von den entsprechend dem Sendebetrieb zeitverzögert angesteuerten Wandlerelementen empfangen wird.

In Fig. 6 ist zu erkennen, dass das mit seiner Längsachse senkrecht zur Zeichenebene orientierte lineare Ultraschallwandlerarray 30 außerdem seitlich versetzt zur Längsachse 32 der Ultraschall-Prüfsonde 20 angeordnet ist, so dass dessen im Schwerpunkt der Sendefläche bei nicht zeitverzögerter Ansteuerung aller Wandlerelemente senkrecht auf dieser Sendefläche stehende Sendeachse bei in den Instrumentierungsstutzen 4 eingeführter Ultraschall-Prüfsonde 20 beabstandet zur nur geringfügig zur Längsachse 32 versetzt angeordneten Mittenachse 12 (in der Figur aus Gründen der Übersichtlichkeit nicht eingezeichnet) des Instrumentierungsstutzens 4 angeordnet ist. Das gesendete Ultraschallsignal S breitet sich dann innerhalb der Ultraschallprüfsonde 20 in einer Ebene 42 aus, die parallel und beabstandet zur Längsachse 32 der Ultraschall-Prüfsonde 20 und damit auch zur Mittenachse 12 des Instrumentierungsstutzens 4 ist. Ein sich senkrecht zu dieser Längsachse 32 in Richtung dieser Sendeachse ausbreitendes Ultraschallsignal S (alle Wandlerelemente werden gleichzeitig angesteuert) nimmt dann im Auftreffpunkt A einen von Null verschiedenen Winkel β zur in diesem Auftreffpunkt A senkrecht auf der Innenoberfläche stehenden Normalen 44 ein, so dass es beim Eintritt in den Instrumentierungsstutzen 4 von dieser Normalen 44 weg gebrochen wird und sich dort unter einem Winkel β'>β gegenüber dieser Normalen 44 ausbreitet. Mit anderen Worten: Das im Instrumentierungsstutzen 4 erzeugte Ultraschallsignal S weist eine zu dessen Umfang tangentiale Komponente T auf, die im dargestellten Ausführungsbeispiel entgegen dem Uhrzeigersinn orientiert ist. Bei sich in der Ebene 42 schräg zur Längsachse 32, d. h. mit einer Richtungskomponente senkrecht zur Zeichenebene ausbreitendem Ultraschallsignal S hat die außermittige Anordnung des Ultraschallwandlerarrays 30 dementsprechend zur Folge, dass die Projektion der Ausbreitungsrichtung des gesendeten Ultraschallsignals S auf eine senkrecht zur Mittenachse 12 des Instrumentierungsstutzens 4 und durch den Auftreffpunkt A des Ultraschallsignals auf die Innenoberfläche verlaufenden Ebene einen von Null verschiedenen Winkel β zu der im Auftreffpunkt A senkrecht auf der Innenoberfläche stehenden Normalen 44 einnimmt.

Im Ausführungsbeispiel der Fig. 7 sind zwei nebeneinander angeordnete Ultraschallwandlerarrays 30 vorgesehen, die sowohl jeweils für sich genommen im Impuls-Echo-Betrieb als auch im Sende-Empfangs-Betrieb, bei dem eines der Ultraschallwandlerarrays 30 ein Ultraschallsignal S sendet und das andere der Ultraschallwandlerarrays 30 ein reflektiertes Ultraschallsignal R empfängt, betrieben werden können. Die Ultraschallwandlerarrays 30 sind spiegelsymmetrisch zu einer die Längsachse 32 enthaltenden und senkrecht zur Zeichenebene verlaufenden Ebene 50 in einer ebenfalls die Längsachse 32 enthaltenden gemeinsamen Ebene 52, d. h. mit parallel zueinander in dieser Ebene 52 verlaufenden Sendeflächen angeordnet, so dass sie im Instrumentierungsstutzen 4 Ultraschallsignale S erzeugen, deren Ausbreitungsrichtungen im Instrumentierungsstutzen zu dessen Umfang tangentiale Komponenten T aufweisen, die gegensinnig zueinander, d.h. im und entgegen dem Uhrzeigersinn orientiert sind. Mit diesen Maßnahmen können im Impuls-Echo-Betrieb Risse aus gegensinnigen Richtungen angeschallt werden. Dadurch ist die Wahrscheinlichkeit, mit der Risse aufgefunden werden können, erhöht. Wenn die Ultraschallwandlerarrays 30 im Sende-Empfangs-Betrieb betrieben werden, können dabei besonders gut Risse aufgefunden werden, die in Umfangsrichtung um den Instrumentierungsstutzen orientiert sind.

Im Ausführungsbeispiel nach Fig. 8 sind die Ultraschallwandlerarrays 30 ebenfalls spiegelsymmetrisch zu einer die Längsachse 32 enthaltenden Ebene 50 jedoch geneigt zueinander angeordnet, um auf diese Weise im Sende-Empfangs-Betrieb eine zusätzliche Einstellung der Ausbreitungsbedingungen auf den Abstand eines in Umfangsrichtung verlaufenden Rissfehlers von der Innenoberfläche des Instrumentierungsstutzens zu ermöglichen. Bei der im Beispiel der Fig. übertrieben dargestellten Neigung, bei der die Sendeflächen einander zugewandt sind, können Rissfehler detektiert werden, die näher an der Innenoberfläche liegen.

### Bezugszeichenliste

2 Reaktordruckbehälter
4 Instrumentierungsstutzen
6 Pufferschweißung
8 Schweißnaht
10,14 Rissfehler
12 Mittenachse
20 Ultraschall-Prüfsonde
22 Sondenkopf
24 Federbalg
26 Vorschubstange
28 Backing
30 Ultraschallwandlerarray
32 Längsachse
34 Vorlaufkörper
36 Koppelfläche
38 Stützelement
40 Steuer- und Auswerteeinrichtung
42 Ebene
44 Normale
50, 52 Ebene

A Auftreffpunkt
S,R gesendetes, reflektiertes Ultraschallsignal
T tangentiale Komponente

α,β Winkel

## Patentansprüche

1. Verfahren zum Prüfen einer an der Innenoberfläche eines Reaktordruckbehälters (2) befindlichen Schweißnaht (8), mit der ein in das Innere dieses Reaktordruckbehälters (2) führender Instrumentierungsstutzen (4) an seinem Außenumfang an den Reaktordruckbehälter (2) angeschweißt ist, bei dem in den Instrumentierungsstutzen (4) eine Ultraschall-Prüfsonde (20) eingeführt wird, mit der in den Instrumentierungsstutzen (4) im Bereich der Schweißnaht (8) ein gesendetes Ultraschallsignal (S) eingekoppelt und ein reflektiertes Ultraschallsignal (R) empfangen wird, wobei sich das gesendete Ultraschallsignal (S) innerhalb des Instrumentierungsstutzens (4) unter einem schiefen Winkel (α') zur Mittenachse (12) des Instrumentierungsstutzens (4) ausbreitet, und das durch zumindest ein aus einer Mehrzahl von in einer Längsrichtung nebeneinander angeordneter Wandlerelementen aufgebautes lineares Ultraschallwandlerarray (30) erzeugt wird, das mit seiner Längsrichtung parallel zur Mittenachse (12) angeordnet ist und dessen Wandlerelemente zum Einstellen des schiefen Winkels (α') zeitverzögert zueinander angesteuert werden.

2. Verfahren nach Anspruch 1, bei dem sich das gesendete Ultraschallsignal (S) innerhalb des Instrumentierungsstutzens (4) in einer Ebene ausbreitet, die parallel und beabstandet zur Mittenachse (12) des Instrumentierungsstutzens (4) ist.

3. Verfahren nach Anspruch 1 oder 2, bei dem das zumindest eine Ultraschallwandlerarray (30) in Impuls-Echo-Technik betrieben wird.

4. Verfahren nach Anspruch 2 oder 3, bei dem eine in Sende-Empfangs-Technik betreibbare Ultraschallwandleranordnung verwendet wird, die zumindest zwei Ultraschallwandlerarrays (30) enthält, die voneinander räumlich beabstandet und spiegelsymmetrisch zu einer die Mittenachse (12) enthaltenden Ebene (50) angeordnet sind.

5. Verfahren nach einem der vorhergehenden Ansprüche, bei dem für das gesendete Ultraschallsignal (S) Transversalwellen verwendet werden.

6. Einrichtung zum Prüfen einer an der Innenoberfläche eines Reaktordruckbehälters (2) befindlichen Schweißnaht (8), mit der ein in das Innere dieses Reaktordruckbehälters (2) führender Instrumentierungsstutzen (4) an seinem Außenumfang an den Reaktordruckbehälter (2) angeschweißt ist, mit einer Steuer- und Auswerteeinrichtung (40) und einer in den Instrumenterungsstutzen (4) einführbaren Ultraschall-Prüfsonde (20) mit zumindest einem linearen Ultraschallwandlerarray (30), das aus einer Mehrzahl von in einer Längsrichtung nebeneinander angeordneten Wandlerelementen aufgebaut ist
**dadurch gekennzeichnet, dass** das Ultraschallwandlerarray (30) an die Steuer- und Auswerteeinrichtung (40) zum zeitverzögerten Ansteuern der Wandlerelemente angeschlossen ist, und mit seiner Längsrichtung parallel und versetzt zu einer Längsachse (32) der Ultraschall-Prüfsonde (20) derart in dieser angeordnet ist, dass eine bei nicht zeitlich verzögerter Ansteuerung aller Wandlerelemente des Ultraschallwandlerarrays (30) senkrecht auf einer Sendefläche des Ultraschallwandlerarrays (30) stehende Sendeachse beabstandet zu dieser Längsachse (32) angeordnet ist.

7. Einrichtung nach Anspruch 6, bei der zumindest zwei räumlich voneinander beabstandet und spiegelsymmetrisch zu einer eine Längsachse (32) der Ultraschall-Prüfsonde (20) enthaltenden Ebene (50) angeordnete Ultraschallwandlerarrays (30) vorgesehen sind, von denen zumindest einer als Sender und der andere zumindest als Empfänger betreibbar ist.

8. Einrichtung nach Anspruch 6 oder 7, bei der die Ultraschall-Prüfsonde (20) eine zylindrische Koppelfläche (36) aufweist, wobei auf einer der Koppelfläche (36) abgewandten Seite der Ultraschall-Prüfsonde (20) zumindest ein federnd gelagertes Stützelement (38) vorgesehen ist, das sich bei eingeführter Ultraschall-Prüfsonde (20) an der Innenoberfläche des Instrumentierungsstutzens (4) abstützt und die Koppelfläche (36) an die Innenoberfläche andrückt.

9. Einrichtung nach einem der Ansprüche 6 bis 8, bei der das oder die Ultraschallwandlerarrays (30) Transversalwellen erzeugen.

## Claims

1. Method for testing a welded seam (8) located on the inner surface of a reactor pressure container (2), with which an instrumentation connecting piece (4) guided into the inner side of said reactor pressure container (2) is welded to the reactor pressure container (2) at its outer circumference, wherein an ultrasonic-testing probe (20) is introduced into the instrumentation connecting piece (4), with which a transmitted ultrasonic signal (S) is passed into the instrumentation connecting piece (4) in the area of the welding seam (8) and a reflected ultrasonic signal (R) is received, wherein the transmitted ultrasonic signal (S) within the instrumentation connecting piece (4) is dispersed at an oblique angle (α') to the middle axis (12) of the instrumentation connecting piece (4), and which is produced by at least one linear ultrasound transducer array (30) constructed from a plurality of transducer elements arranged alongside one another in a longitudinal direction, which is arranged with its longitudinal direction parallel to the middle axis (12) and whose transducer elements are activated at a time delay to one another for adjusting the oblique angle (α').

2. Method according to claim 1, wherein the transmitted ultrasonic signal (S) within the instrumentation connecting piece (4) is dispersed in a plane, which is parallel and at a distance to the middle axis (12) of the instrumentation connecting device (4).

3. Method according to claim 1 or 2, wherein the at least one ultrasound transducer array (30) is operated using the pulse-echo technique.

4. Method according to claim 2 or 3, wherein an operable ultrasound transducer arrangement is used in the transmission-reception technique, containing at least two ultrasound transducer arrays (30) which are arranged spatially at a distance from one another and mirror-inverted to a plane (50) containing the middle axis (12).

5. Method according to one of the preceding claims, wherein transverse waves are used for the transmitted ultrasonic signal (S).

6. Device for testing a welded seam (8) located on the inner surface of a reactor pressure container (2), with which an instrumentation connecting piece (4) guided into the inner side of said reactor pressure container (2) is welded to the reactor pressure container (2) at its outer circumference, having a control and evaluation device (40) and an ultrasonic-testing probe (20) which can be introduced into the instrumentation connecting piece (4), having at least onelinear ultrasound transducer array (30) which is constructed from a plurality of transducer elements arranged alongside one another in a longitudinal direction,
**characterised in that**,
the ultrasound transducer array (30) is connected to the control and evaluation device (40) for time-delayed activation of the transducer elements, and is arranged in this with its longitudinal direction parallel and offset to a longitudinal axis (32) of the ultrasonic-testing probe (20) in such a way that, during non-time-delayed activation of all transducer elements of the ultrasound transducer array (30), an upright transmission axis is arranged perpendicularly to a transmission surface of the ultrasound transducer array (30) at a distance to said longitudinal axis (32).

7. Device according to claim 6, wherein at least two ultrasound transducer arrays (30) are provided, which are arranged spatially at a distance from one another and mirror-inverted to a plane (50) containing a longitudinal axis (32) of the ultrasonic-testing probe (20), whereof at least one can be operated as a transmitter and the other at least as a receiver.

8. Device according to claim 6 or 7, wherein the ultrasonic-testing probe (20) has a cylindrical coupling surface (36), wherein at least one spring-loadedly mounted support element (38) is provided on a side of the ultrasonic-testing probe (20) which is averted from the coupling surface (36), which is reinforced when the ultrasonic-testing probe (20) is introduced on the inner surface of the instrument connecting piece (4) and which presses the coupling surface (36) against the inner surface.

9. Device according to one of claims 6 to 8, wherein the ultrasound transducer array(s) (30) produce(s) transverse waves.

## Revendications

1. Procédé de contrôle d'un cordon (8) de soudure, qui se trouve sur la surface intérieure d'une cuve (2) sous pression de réacteur et par lequel une tubulure (4) d'instrumentation menant à l'intérieur de cette cuve (2) sous pression de réacteur est soudée sur son pourtour extérieur à la cuve (2) sous pression de réacteur, dans lequel on introduit dans la tubulure (4) d'instrumentation une sonde (20) de contrôle par ultrason, par laquelle un signal (S) d'ultrason incident est envoyé dans la tubulure (4) d'instrumentation dans la zone du cordon (8) de soudure et un signal (R) d'ultrason réfléchi est reçu, le signal (S) d'ultrason incident se propageant dans la tubulure (4) d'instrumentation en faisant un angle (α') oblique avec l'axe (12) médian de la tubulure (4) d'instrumentation et on produit la matrice (30) linéaire de transducteurs d'ultrason, formée d'au moins un parmi une multiplicité d'éléments transducteurs disposés les uns à côté des autres dans une direction longitudinale, matrice qui par sa direction longitudinale est disposée parallèlement à l'axe (12) médian et dont les éléments transducteurs sont commandés d'une manière retardée les uns par rapport aux autres pour régler l'angle (α') oblique.

2. Procédé suivant la revendication 1, dans lequel le signal (S) d'ultrason incident se propage dans la tubulure (4) d'instrumentation dans un plan qui est parallèle et à distance de l'axe (12) médian de la tubulure (4) d'instrumentation.

3. Procédé suivant la revendication 1 ou 2, dans lequel on fait fonctionner une matrice (30) de transducteur d'ultrason dans la technique d'écho d'impulsions.

4. Procédé suivant la revendication 2 ou 3, dans lequel on utilise un agencement de transducteurs d'ultrason pouvant fonctionner dans une technique d'émission-réception, agencement qui comporte au moins deux matrices (30) de transducteurs d'ultrason, qui sont à distance l'une de.l'autre dans l'espace et qui sont disposées d'une manière symétrique comme en un miroir par rapport à un plan (50) passant par l'axe (12) médian.

5. Procédé suivant l'une des revendications précédentes, dans lequel on utilise des ondes transversales pour le signal (S) d'ultrason incident.

6. Dispositif de contrôle d'un cordon (8) de soudure, qui se trouve sur la surface intérieure d'une cuve (2) sous pression de réacteur et par lequel une tubulure (4) d'instrumentation menant à l'intérieur de cette cuve (2) sous pression de réacteur est soudée sur son pourtour extérieur à la cuve (2) sous pression de réacteur, comprenant un dispositif (40) de commande et d'exploitation et une sonde (20) de contrôle par ultrason, qui peut être introduite dans la tubulure (4) d'instrumentation et qui a au moins une matrice (30) linéaire de transducteurs d'ultrason, qui est formée d'une multiplicité d'éléments transducteurs disposés les uns à côté des autres dans une direction longitudinale,
**caractérisé en ce que**
la matrice (30) de transducteurs d'ultrason est reliée au dispositif (40) de commande et d'exploitation, pour la commande retardée dans le temps des éléments transducteurs, et par sa direction longitudinale est montée parallèlement à un axe (32) longitudinal de la sonde (20) de contrôle par ultrason et de manière décalée par rapport à cet axe (32) longitudinal de façon à ce que, lors d'une commande non retardée dans le temps de tous les éléments transducteurs de la matrice (30) de transducteurs d'ultrason, l'axe d'émission perpendiculaire à une surface d'émission de la matrice (30) de transducteurs d'ultrason soit à distance de cet axe (32) longitudinal.

7. Dispositif suivant la revendication 6, dans lequel il est prévu au moins deux matrices (30) de transducteurs d'ultrason à distance l'une de l'autre dans l'espace et symétrique comme en un miroir par rapport à un plan (30) passant par l'axe (32) longitudinal de la sonde (20) de contrôle par ultrason, matrices dont l'une au moins peut fonctionner en émetteur et l'autre au moins en récepteur.

8. Dispositif suivant la revendication 6 ou 7, dans lequel la sonde (20) de contrôle par ultrason a une surface (36) de couplage cylindrique, dans lequel d'un côté de la sonde (20) de contrôle par ultrason éloigné de la surface (36) de couplage est prévu au moins un élément (38) d'appui, qui est monté sur ressort et qui, lorsque la sonde (20) de commande par ultrason est introduite, s'appuie sur la surface intérieure de la tubulure d'instrumentation et qui presse la surface (36) de couplage sur la surface intérieure.

9. Dispositif suivant l'une des revendications 6 à 8, dans lequel la ou les matrices (30) de transducteurs par ultrason produisent des ondes transversales.
